# EUROPEAN PATENT APPLICATION

(11) **EP 3 163 517 A1**
(43) Date of publication of application: **03.05.2017**
(21) Application number: 16195924.2
(22) Date of filing: 27.10.2016
(51) Int. Cl.: G06Q 10/00, G06Q 10/06, G06Q 50/04

(54) **NUCLEAR POWER PLANT DIGITAL PLATFORM**

(30) Priority: 27.10.2015 US 201562246791 P; 19.10.2016 US 201615297981
(71) Applicant: Accenture Global Services Limited, Dublin 4 (IE)
(72) Inventor: LEPINE, Bethany, New York, NY New York 10018 (US); KOWAL, Keith E., Philadelphia, PA Pennsylvania 19128 (US); MAXEY, Terry Michael, Lafayette, CA California 94549 (US); COLBORN, Jeffrey P., Holly Springs, NC North Carolina 27540 (US)
(74) Representative: Müller-Boré & Partner Patentanwälte PartG mbB

(57) **Abstract**

A device may receive nuclear plant information associated with a nuclear plant. The nuclear plant information may include information relating to operation of equipment located within the nuclear plant. The infonnation may be provided by the equipment or by a set of worker devices carried by workers in the nuclear plant. The device may analyze the nuclear plant information. The device may determine, based on analyzing the nuclear plant information, an analysis result corresponding to the equipment. The analysis result may include information describing at least one of: a performance of the equipment, or a task to be performed in association with maintaining, repairing, or observing the equipment. The device may provide information associated with the analysis result.

## Description

### BACKGROUND

A nuclear power plant is a thermal power station in which the heat source is a nuclear reactor. Nuclear fission in the nuclear reactor core heats a reactor coolant that is applied to a steam generator to produce pressurized steam. The pressurized steam is applied to a turbine and rotates a shaft on the turbine that is coupled to an alternator to produce electricity.

### SUMMARY

According to some possible implementations, a device may comprise one or more processors to: receive nuclear plant information associated with a nuclear plant, where the nuclear plant information may include information relating to operation of equipment located within the nuclear plant, and where the information may be provided by the equipment or by a set of worker devices carried by workers in the nuclear plant; analyze the nuclear plant information; determine, based on analyzing the nuclear plant information, an analysis result corresponding to the equipment, where the analysis result may include information describing at least one of: a performance of the equipment, or a task to be performed in association with maintaining, repairing, or observing the equipment; and provide information associated with the analysis result.

According to some possible implementations, a method may include: obtaining, by a device, nuclear plant information that includes information relating to operation of equipment located within a nuclear plant, where the nuclear plant information may be provided by a plurality of worker devices or a plurality of sensors associated with the equipment; analyzing, by the device, the nuclear plant information; determining, by the device and based on analyzing the nuclear plant information, an analysis result corresponding to the equipment where the analysis result may include information describing at least one of: a performance of the equipment, or a task to be performed in association with maintaining, repairing, or observing the equipment; and providing information associated with the analysis result.

According to some possible implementations, a non-transitory computer-readable medium may store one or more instructions that, when executed by one or more processors, cause the one or more processors to: receive nuclear plant information associated with a nuclear plant, where the nuclear plant information may include information relating to operation of equipment in the nuclear plant, and where the information may be provided by sensors in the nuclear plant, the equipment, and worker devices corresponding to workers in the nuclear plant; perform an analysis of the nuclear plant information; obtain, based on performing the analysis of the nuclear plant information, an analysis result associated with the equipment, where the analysis result may include information describing at least one of: a performance of the equipment, or a task to be performed in association with the equipment; and provide information associated with the analysis result.

### BRIEF DESCRIPTION OF THE DRAWINGS

Figs. 1A and 1B are diagrams of an overview of an example implementation described herein;
Fig. 2 is a diagram of an example environment in which systems and/or methods, described herein, may be implemented;
Fig. 3 is a diagram of example components of one or more devices of Fig. 2; and
Fig. 4 is a flow chart of an example process for analyzing nuclear plant information associated with a nuclear power plant, and providing a result associated with the analysis.

### DETAILED DESCRIPTION

The following detailed description of example implementations refers to the accompanying drawings. The same reference numbers in different drawings may identify the same or similar elements.

A significant amount of resources (e.g., monetary, time, personnel, or the like) may be needed in order to allow a nuclear power plant (herein referred to as a nuclear plant) to maintain a level of performance while also satisfying industrial and/or safety requirements. One factor that may contribute to this is that technology, processes, techniques, or the like, implemented at the nuclear plant may be outdated.

For example, an operator of the nuclear plant may not analyze, or even collect, information gathered from workers in the field, workers in a control room, equipment sensors, or the like, even when analyzing such information may yield valuable results associated with improving operation and/or maintenance of the nuclear plant. As another example, a worker in the field may be unable to access information (e.g., drawings, work packages, procedures, or the like) associated with a task (e.g., a maintenance task, a safety task, an operations task, or the like) that the worker is to perform while in the field. Moreover, the worker may be unable to provide task-related information (e.g., a result, feedback, notes, or the like) associated with the task to one or more other workers (e.g., in the field, in a control room, or the like).

Implementations described herein may provide a digital platform for a nuclear plant (herein referred to as a nuclear plant digital platform) that reduces operations and/or maintenance costs of the nuclear plant, while maintaining or improving a level of performance and allowing industrial and safety requirements to be satisfied.

In some implementations, the nuclear plant digital platform may perform (e.g., using equipment sensor data, worker-gathered data, or the like) analytics in order to provide results that increase performance, reduce cost, and/or increase efficiency of nuclear plant maintenance and/or operations. Additionally, or alternatively, the nuclear plant digital platform may provide for implementation of process and/or technology improvements that improve worker productivity and/or safety. Additionally, or alternatively, the digital nuclear plant platform may provide enhanced collaboration between workers, supervisors, contractors, operations personnel, engineering personnel, or the like, through real-time information updating and/or by allowing for remote access to information.

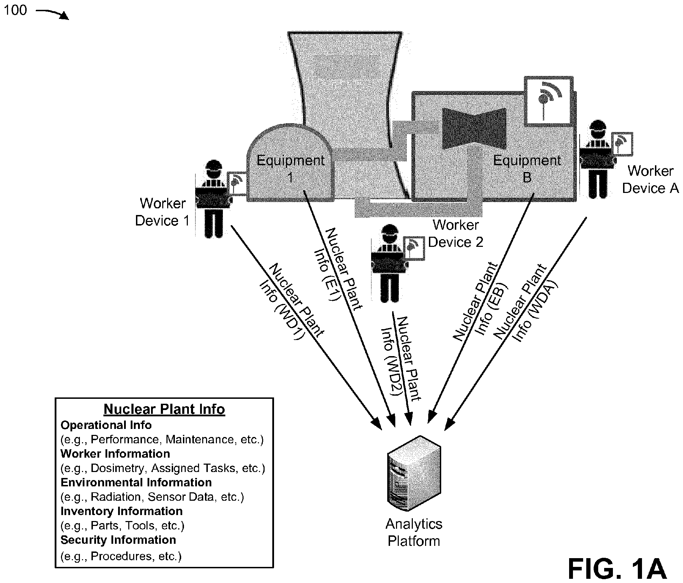

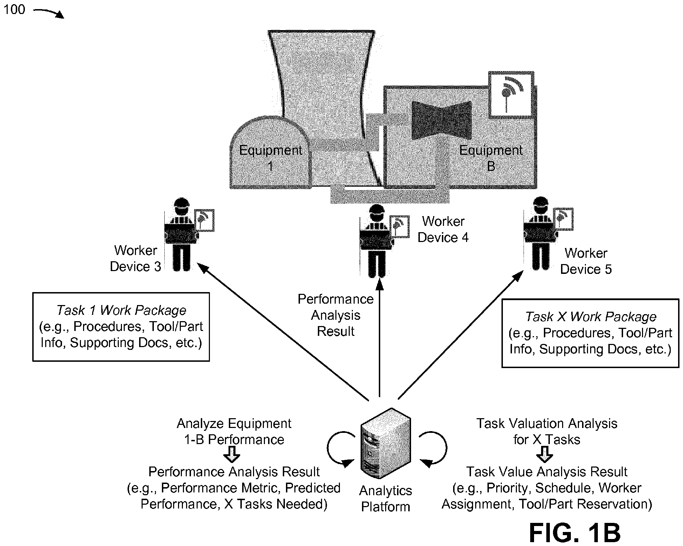

Figs. 1A and 1B are diagrams of an overview of an example implementation 100 described herein. Example implementation 100 includes worker device 1 through worker device A (A ≥ 1), equipment 1 through equipment B (B ≥ 1), and an analytics platform.

As shown in Fig. 1A, the analytics platform receives nuclear plant information from various sources in the nuclear plant, such as worker device 1 through worker device A (e.g., mobile devices carried by the workers in the field), and equipment 1 through equipment B (e.g., equipment in the nuclear plant). In some implementations, the nuclear plant information may include information associated with various aspects of the nuclear plant, such as operational information, worker information, environmental information, inventory information, security information, or the like.

The operational information may include performance information associated with a measured performance of nuclear plant equipment, maintenance information that describes a maintenance activity performed or scheduled to be performed on equipment in the nuclear plant, corrective action information associated with reporting an action that is to be undertaken with respect to the equipment, lockout/tagout information for ensuring that equipment is properly locked out and/or tagged out for maintenance and/or repair, commitment information that identifies commitments to perform maintenance on equipment, engineering program information associated with equipment design, plant line-up information describing line-ups for items of equipment in the nuclear plant, or the like.

The worker information may include information associated with a worker in the nuclear plant, such as dosimetry information related to a radiation dosage experienced by a worker, assigned task information that relates to a task to which a worker is assigned, training information that identifies a level of training of a worker, qualification information that identifies a level of qualification of a worker, or the like.

The environmental information may include information associated with an environmental condition in the nuclear plant, such as information that identifies a radiation level at a location in the nuclear plant, sensor information that includes sensor data collected at a location in the nuclear plant (e.g., gas sensor data, temperature sensor data, etc.), or the like.

The inventory information may include information relating to parts and/or tools for operating, repairing, and/or maintaining equipment in the nuclear plan, such as information that identifies whether a part and/or a tool is available, information indicating a status of an order associated with a part and/or a tool, information indicating a location of a part and/or a tool in the nuclear plant, or the like.

The security information may include information relating to securing the nuclear plant, such as information associated with a security search, information for securing ingress/egress at the nuclear plant, information associated with a security procedure for granting access to an area or a location in the nuclear plant, a weapons check procedure, or the like.

As shown in Fig. 1B, the analytics platform may perform an analysis of the nuclear plant information. For example, as shown, the analytics platform may perform equipment performance analytics (i.e., analyzing equipment performance) based on the nuclear plant information. The equipment performance analytics may include an analysis associated with performance, operation, and/or a condition of equipment (e.g., equipment 1 through equipment B) in the nuclear plant. The analytics platform may generate an analysis result, associated with the nuclear plant, based on performing the equipment performance analytics. For example, as shown in Fig. 1B, the analysis result of the equipment performance analytics may include a performance metric that indicates a present level of performance of equipment, a prediction for a future performance of equipment, information that identifies a set of X tasks (e.g., preventative maintenance tasks, repair tasks, tasks associated with observing ongoing performance of equipment, etc.) that may need to be performed on one or more items of equipment (e.g., in order to maintain or improve performance of the equipment), or the like.

As further shown in Fig. 1B, and as another example of analyzing the nuclear plant information, the analytics platform may perform task valuation analytics based on the nuclear plant. In some implementations, task valuation analytics may include an analysis associated with prioritizing, valuing, organizing, and/or scheduling a task associated with equipment in the nuclear plant.

For example, as shown in Fig. 1B, the analytics platform may perform a task valuation analysis of the set of X tasks identified based on the equipment performance analysis. In some implementations, the analytics platform may perform task valuation analytics on tasks identified by the analytics platform. Additionally, or alternatively, the analytics platform may perform task valuation analytics for tasks identified based on user input to the analytics platform. As shown, an analysis result of the task valuation analysis may include a priority for the set of X tasks (e.g., a priority corresponding to each task), a schedule for performing the X tasks (e.g., including a date and/or time that each task is to be performed), information that identifies workers to be assigned to each of the set of X tasks, information that identifies a tool and/or a part that has been reserved and/or ordered in association with performing the task, or the like.

As further shown, the analytics platform may provide information associated with the analysis results of the task valuation analytics. For example, as shown, the analytics platform may generate work packages for the set of X tasks. In some implementations, the work package may include information that identifies the task, information that describes the task, information that identifies a tool and/or a part to be used to perform the task, background information associated with the task, documentation associated with an item of equipment, training material, emergency and/or evacuation procedures, an interface that supports audio and/or video communication with a remote worker, dosimetry information associated with a worker, or the like. As shown, the analytics platform may provide the work packages to worker devices corresponding to workers that have been assigned to perform the respective tasks. For example, as shown, the analytics platform may provide a task 1 work package to worker device 3 that is carried by a worker assigned to perform task 1, and may provide a task X work package to worker device 5 that is carried by a worker assigned to perform task X.

In some implementations, the analytics platform may provide information associated with the analysis result of the equipment performance analysis. For example, as shown, the analytics platform may provide information associated with the analysis result of the equipment performance analytics to worker device 4 that is carried by a worker assigned to monitor performance of an item of equipment associated with the analysis result (e.g., such that the worker may view the analysis result).

In this way, the analytics platform may collect and analyze nuclear plant information, associated with the nuclear plant, and provide analysis results that support improved operation of the nuclear plant (e.g., by automatically determining performance results, identifying tasks to be performed, scheduling tasks and assigning workers, adjusting equipment parameters or settings without human intervention, or the like). As such, the analytics platform allows operations and/or maintenance costs of the nuclear plant to be reduced, while maintaining or improving a level of performance of the nuclear plant and allowing industrial and safety requirements to be satisfied.

As indicated above, Figs. 1A and 1B are provided merely as an example. Other examples are possible and may differ from what was described with regard to Figs. 1A and 1B.

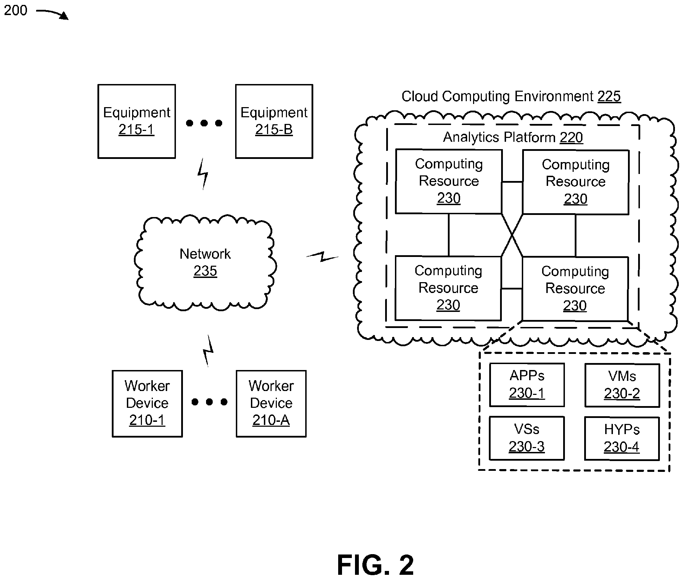

Fig. 2 is a diagram of an example environment 200 in which systems and/or methods, described herein, may be implemented. As shown in Fig. 2, environment 200 may include one or more worker devices 210-1 through 210-A (A ≥ 1) (herein collectively referred to as worker devices 210, and individually as worker device 210), one or more items of equipment 215-1 through 215-B (B ≥ 1) (herein collectively and individually referred to as equipment 215), an analytics platform 220 hosted within a cloud computing environment 225, and a network 235. Devices of environment 200 may interconnect via wired connections, wireless connections, or a combination of wired and wireless connections.

Worker device 210 includes one or more devices capable sending and/or receiving information associated with a nuclear plant, such as operation information, worker information environmental information, inventory information, security information, or the like. For example, worker device 210 may include a communication and computing device, such as a mobile phone (e.g., a smart phone, a radiotelephone, or the like), a laptop computer, a tablet computer, a handheld computer, a wearable communication device (e.g., a smart wristwatch, a pair of smart eyeglasses, or the like), or a similar type of device. In some implementations, worker device 210 may receive and/or transmit information from and/or to another device of environment 200, such as analytics platform 220.

Equipment 215 includes one or more items of equipment associated with a nuclear plant. For example, equipment 215 may include one or more items of equipment associated with a nuclear reactor, a steam turbine, a generator, a cooling system, a safety valve, a feedwater pump, an emergency power supply, or another type of equipment located in the nuclear plant. In some implementations, equipment 215 may be capable of sending information to and/or receiving information from another device of environment 200, such as analytics platform 220.

In some implementations, equipment 215 may include a device capable of detecting, determining, and/or providing information. For example, equipment 215 may include one or more sensors, such as an acoustic sensor, a sound sensor, a vibration sensor, a chemical sensor, a current sensor, an electric potential sensor, a magnetic sensor, a flow sensor, a fluid velocity sensor, an ionizing radiation sensor, a subatomic particles sensor, a position sensor, an angle sensor, a displacement sensor, a distance sensor, a speed sensor, an acceleration sensor, an optical sensor, a light sensor, a pressure sensor, a force sensor, a density sensor, a level sensor, a thermal sensor, a heat sensor, a temperature sensor, a proximity sensor, a presence sensor, or the like. Additionally, or alternatively, equipment 215 may include another type of device capable of determining and/or providing information.

Analytics platform 220 includes one or more devices capable of receiving, determining, storing, processing, providing, and/or analyzing nuclear plant information associated with a nuclear plant. For example, analytics platform 220 may include a server or a group of servers. In some implementations, analytics platform 220 may be capable of analyzing the nuclear plant information, generating an analysis result based on analyzing the nuclear plant information, and providing information associated with the analysis result to worker devices 205, equipment 215, or another device (e.g., such that an action is performed, a task is scheduled, a part is ordered, information is provided to worker device 210, or the like). Additionally, or alternatively, analytics platform 220 may support one or more capabilities of a digital nuclear plant platform described herein.

In some implementations, as shown, analytics platform 220 may be hosted in cloud computing environment 225. Notably, while implementations described herein describe analytics platform 220 as being hosted in cloud computing environment 225, in some implementations, analytics platform 220 may not be cloud-based (i.e., may be implemented outside of a cloud computing environment) or may be partially cloud-based.

Cloud computing environment 225 includes an environment that hosts analytics platform 220. Cloud computing environment 225 may provide computation, software, data access, storage, etc. services that do not require end-user (e.g., worker device 210) knowledge of a physical location and configuration of system(s) and/or device(s) that hosts analytics platform 220. As shown, cloud computing environment 225 may include a group of computing resources 230 (referred to collectively as "computing resources 230" and individually as "computing resource 230").

Computing resource 230 may include one or more personal computers, workstation computers, server devices, or another type of computation and/or communication device. In some implementations, computing resource 230 may host analytics platform 220. The cloud resources may include compute instances executing in computing resource 230, storage devices provided in computing resource 230, data transfer devices provided by computing resource 230, etc. In some implementations, computing resource 230 may communicate with other computing resources 230 via wired connections, wireless connections, or a combination of wired and wireless connections.

As further shown in Fig. 2, computing resource 230 may include a group of cloud resources, such as one or more applications ("APPs") 230-1, one or more virtual machines ("VMs") 230-2, virtualized storage ("VSs") 230-3, one or more hypervisors ("HYPs") 230-4, or the like.

Application 230-1 may include one or more software applications that may be provided to or accessed by worker device 210. Application 230-1 may eliminate a need to install and execute the software applications on worker device 210. For example, application 230-1 may include software associated with analytics platform 220 and/or any other software capable of being provided via cloud computing environment 225. In some implementations, one application 230-1 may send/receive information to/from one or more other applications 230-1, via virtual machine 230-2.

Virtual machine 230-2 may include a software implementation of a machine (e.g., a computer) that executes programs like a physical machine. Virtual machine 230-2 may be either a system virtual machine or a process virtual machine, depending upon use and degree of correspondence to any real machine by virtual machine 230-2. A system virtual machine may provide a complete system platform that supports execution of a complete operating system ("OS"). A process virtual machine may execute a single program, and may support a single process. In some implementations, virtual machine 230-2 may execute on behalf of a user (e.g., worker device 210), and may manage infrastructure of cloud computing environment 225, such as data management, synchronization, or long-duration data transfers.

Virtualized storage 230-3 may include one or more storage systems and/or one or more devices that use virtualization techniques within the storage systems or devices of computing resource 230. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

Hypervisor 230-4 may provide hardware virtualization techniques that allow multiple operating systems (e.g., "guest operating systems") to execute concurrently on a host computer, such as computing resource 230. Hypervisor 230-4 may present a virtual operating platform to the guest operating systems, and may manage the execution of the guest operating systems. Multiple instances of a variety of operating systems may share virtualized hardware resources.

Network 235 may include one or more wired and/or wireless networks. For example, network 235 may include a cellular network (e.g., a long-term evolution (LTE) network, a 3G network, a code division multiple access (CDMA) network, or the like), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

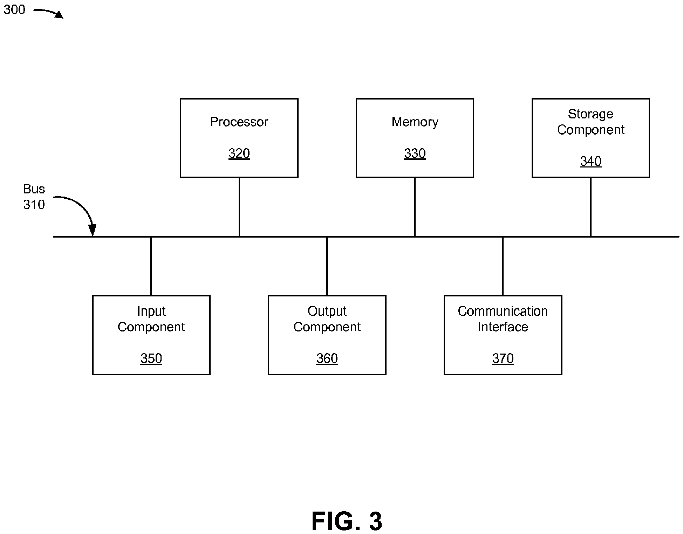

Fig. 3 is a diagram of example components of a device 300. Device 300 may correspond to worker device 210, equipment 215, and/or analytics platform 220. In some implementations, worker device 210, equipment 215, and/or analytics platform 220 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 includes a component that permits communication among the components of device 300. Processor 320 is implemented in hardware, firmware, or a combination of hardware and software. Processor 320 takes the form of a central processing unit (CPU), a graphics processing unit (GPU), an accelerated processing unit (APU), a microprocessor, a microcontroller, a field-programmable gate array (FPGA), an application-specific integrated circuit (ASIC), or another type of processing component. In some implementations, processor 320 includes one or more processors capable of being programmed to perform a function. Memory 330 includes a random access memory (RAM), a read only memory (ROM), and/or another type of dynamic or static storage device (e.g., a flash memory, a magnetic memory, and/or an optical memory) that stores information and/or instructions for use by processor 320.

Storage component 340 stores information and/or software related to the operation and use of device 300. For example, storage component 340 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 350 includes a component that permits device 300 to receive information, such as via user input (e.g., a touch screen display, a keyboard, a keypad, a mouse, a button, a switch, and/or a microphone). Additionally, or alternatively, input component 350 may include a sensor for sensing information (e.g., a global positioning system (GPS) component, an accelerometer, a gyroscope, and/or an actuator). Output component 360 includes a component that provides output information from device 300 (e.g., a display, a speaker, and/or one or more light-emitting diodes (LEDs)).

Communication interface 370 includes a transceiver-like component (e.g., a transceiver and/or a separate receiver and transmitter) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a non-transitory computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

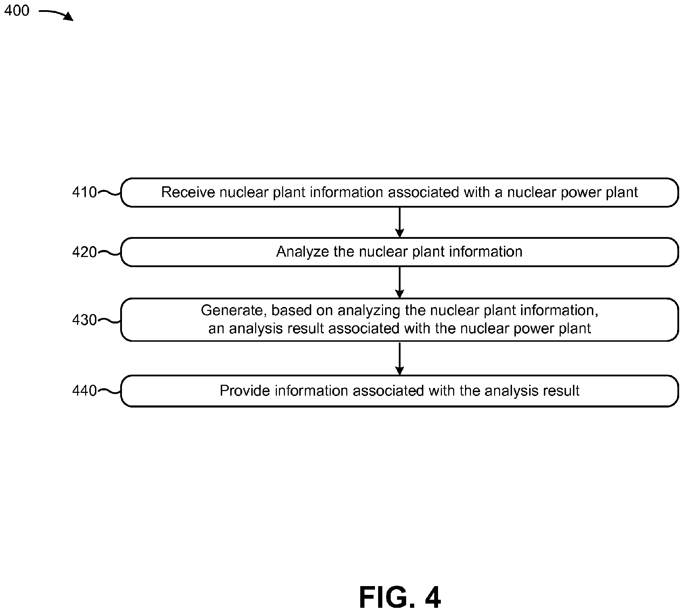

Fig. 4 is a flow chart of an example process 400 for analyzing nuclear plant information associated with a nuclear power plant, and providing a result associated with the analysis. In some implementations, one or more process blocks of Fig. 4 may be performed by analytics platform 220. In some implementations, one or more process blocks of Fig. 4 may be performed by another device or a group of devices separate from or including analytics platform 220, such as worker device 210.

As shown in Fig. 4, process 400 may include receiving nuclear plant information associated with a nuclear power plant (block 410). For example, analytics platform 220 may receive nuclear plant information associated with a nuclear plant.

In some implementations, the nuclear plant information may include information relating to various aspects of a nuclear plant. For example, the nuclear plant information may include operational information associated with equipment 215 in the nuclear plant, worker information associated with one or more workers in the nuclear plant, environmental information collected in or around the nuclear plant, inventory information relating to parts and/or tools for operating, repairing, and/or maintaining equipment 215 in the nuclear plant, security information associated with the nuclear plant, or the like. Examples of these types of nuclear plant information are described below.

In some implementations, the operational information may include information relating to operation, maintenance, and/or a condition of equipment 215. For example, the operational information may include performance information associated with a measured performance of equipment 215 (e.g., an amount of output, a rate of production, a power consumption rate, a measurement of a performance metric, or the like). In some implementations, the performance information may be obtained via worker device 210 (e.g., when the worker collects, reads, and/or measures the performance information and inputs the performance information). Additionally, or alternatively, the performance information may be obtained from equipment 215 and/or a sensor associated with equipment 215.

As another example, the operational information may include maintenance information that describes a maintenance task (e.g., being performed, to be performed, previously performed) on equipment 215 in the nuclear plant, such as information that identifies the task, information that indicates progress of the task, information that identifies a date that the task was completed, or the like. As another example, the operational information may include information that identifies an operational state of equipment 215 (e.g., operational, not operational, damaged, offline, in repair, operating at peak performance, operating at Z% of peak performance, or the like).

As another example, the operational information may include corrective action information associated with an action reported as being needed with respect to the equipment 215 (e.g., when a worker identifies that equipment 215 requires the action to performed to be operational in order to meet a safety standard, etc.). As yet another example, the operational information may include lockout/tagout information for ensuring that equipment 215 is properly locked out and/or tagged out (e.g., such that equipment 215 is locked, offline, and/or inaccessible by workers).

As still another example, the operational information may include commitment information that identifies commitments to perform maintenance on equipment 215. In some implementations, the commitment information may be analyzed to determine an origin of the commitment and/or to determine whether the commitment is expired (e.g., such that a task associated with the commitment need not be performed).

As another example, the operational information may include engineering program information associated with equipment 215 design, such as an electronic design basis, a battery load requirement, a fire load requirement, or the like. As still another example, the operational information may include plant line-up information that describes line-ups for equipment 215 in the nuclear plant (e.g., electrical and/or mechanical line-ups). In some implementations, the operational information may include other types of information (e.g., stored or accessible by analytics platform 220), such as documentation associated with a design of equipment, technical specifications of equipment, or the like.

Additionally, or alternatively, the nuclear plant information may include worker information associated with a worker in the nuclear plant. For example, the worker information may include dosimetry information that identifies a dosage of radiation experienced by the worker, a maximum allowable dosage that the worker may experience, or the like. In some implementations, the dosimetry information may be received (e.g., in real-time, automatically, periodically) from a personal dosimetry device worn by the worker.

As another example, the worker information may include task information that relates to a task to be performed by the worker, being performed by the worker, or scheduled for performance by the worker. In some implementations, the task information may include timing information (e.g., a time the worker started or is to start the task, a time that the worker completed or is to complete the task), a date associated with the task, information that identifies the task and/or the associated equipment 215, information that identifies a tool and/or a part needed for the task, progress information associated with a task being performed, or the like.

As another example, the worker information may include training information that identifies a level of training of the worker and/or a training activity (e.g., a video, a class) to be undertaken by the worker. Similarly, and as another example, the worker information may include qualification information that identifies a level of qualification of the worker. In some implementations, the qualification information and/or the training information may be used by analytics platform 220 to determine whether the worker can be assigned a particular task, should be given access to additional training in order to perform the particular task, or the like.

Additionally, or alternatively, the nuclear plant information may include environmental information associated with an environmental condition in or near the nuclear plant. For example, the environmental information may include radiation information that describes a level or an amount of radiation in a particular area of the nuclear plant. As another example, the environmental information may include sensor information, such as information provided by a gas sensor that monitors gas levels in a confined space of the nuclear plant, information provided by a temperature sensor that monitors a temperature at a particular location in the nuclear plant, or the like.

Additionally, or alternatively, the nuclear plant information may include inventory information associated with parts and/or tools for repairing, operating, and/or maintaining the nuclear plant. For example, the inventory information may include information that identifies a part, availability of the part, a status of an order associated with the part, a storage location of the part, or the like. As another example, the inventory information may include information that identifies a tool, availability of the tool, a storage location of the tool, a wait list for the tool, or the like.

Additionally, or alternatively, the nuclear plant information may include security information relating to the nuclear plant. For example, the security information may include information relating to a security search, such as a photo, a video, a report, or the like. As another example, the security information may include information for securing ingress/egress of deliveries (e.g., a bill of lading, a delivery schedule, a description of a delivery vehicle, or the like). As still another example, the security information may include information that describes a security procedure associated with granting access to a particular area in the nuclear plant, information associated with a weapons check procedure, or the like.

In some implementations, an item of nuclear plant information may include an identifier associated with the item of nuclear plant information. For example, an item of operational information may include information that identifies an item of equipment 215 corresponding to an item of operational information. In some implementations, equipment 215 may be fitted with a scannable identifier (e.g., a bar code, a quick response (QR) code, a radio frequency identifier (RFID) chip, or the like) in order to facilitate accurate identification of equipment 215 during collection and/or analysis of the nuclear plant information. As another example, an item of operational information may include information that identifies a location of equipment 215 (e.g., a room number, an area of the nuclear plant, or the like).

As another example, an item of worker information may include information that identifies a worker associated with the item of worker information (e.g., a worker name, a worker identification number, etc.).

As another example, an item of environmental information may include information that identifies an area of the nuclear plant corresponding to the item of environmental information (e.g., a room number, a plant area number, a floor number).

As another example, an item of inventory information may include information that identifies a part or a tool corresponding to the item of inventory information. In some implementations, a part or a tool may be fitted with a scannable identifier in order to facilitate accurate identification during collection and/or analysis of inventory information.

Additionally, or alternatively, an item of nuclear plant information may include a timestamp that specifies a time corresponding to the item of nuclear plant information (e.g., a time at which the item of nuclear plant information was collected).

In some implementations, an item of nuclear plant information may include textual information (e.g., a text string), an electronic document, an image, a video, an audio recording, or the like.

In some implementations, the nuclear plant information may include information from multiple nuclear plants. This allows analytics platform 220 to operate based on nuclear plant information from multiple nuclear plants (e.g., such that analytics platform 220 may generate an analysis result for a first nuclear plant based on nuclear plant information from a second nuclear plant). In this way, analytics platform 220 may operate using big data techniques to process millions or billions of data items.

In some implementations, analytics platform 220 may receive the nuclear plant information from one or more worker devices 210. For example, a worker may input the nuclear plant information via worker device 210, and worker device 210 may (e.g., automatically) provide the nuclear plant information to analytics platform 220. As another example, worker device 210 may determine, collect, read, sense, or the like, the nuclear plant information (e.g., when worker device 210 is equipped with a scanner, a sensor, or the like), and may provide the nuclear plant information to analytics platform 220.

In some implementations, worker device 210 may receive input in association with a work package provided to worker device 210 (e.g., such that the worker may input and/or gather nuclear plant information relevant to an assigned task described by the work package). Additional details regarding work packages are described below.

In some implementations, worker device 210 may provide the nuclear plant information to analytics platform 220 in real-time or near real-time (e.g., when worker device 210 is connected to a wireless network, such as a cellular network, a wireless local area network, or the like).

Additionally, or alternatively, analytics platform 220 may receive the nuclear plant information from equipment 215 in the nuclear plant. For example, equipment 215 in the nuclear plant may (e.g., automatically) determine, collect, read, sense, or the like, the nuclear plant information, and may provide the nuclear plant information to analytics platform 220. In some implementations, equipment 215 may provide the nuclear plant information in real-time or near real-time (e.g., when the equipment 215 is connected to a wireless network, such as a cellular network, a wireless local area network, or the like).

In some implementations, analytics platform 220 may receive the nuclear plant information from another device, such as a user device via which a user inputs information for storage, a server that stores or maintains inventory information, security information, or the like.

In this way, analytics platform 220 may aggregate nuclear plant information from many different sources for analysis. Here, since the nuclear plant information may be stored by analytics platform 220 within cloud computing environment 225 (e.g., rather than each worker device 210 and each item of equipment 215), memory resources and/or processing resources may be conserved on worker device 210 and/or equipment 215. Moreover, collection of the nuclear plant information from the many different sources (e.g., in real-time or near real-time) facilitates analysis of the nuclear plant information that may yield improved operation, performance, and/or maintenance, associated with the nuclear plant, as described below (e.g., as compared to a nuclear plant that operates in a traditional manner, without analytics platform 220). Furthermore, collection of the nuclear plant information from the many different sources (e.g., in real-time or near real-time) facilitates analysis of the nuclear plant information quickly and more efficiently as opposed to gathering the nuclear plant information from the many different sources in non-real-time or non-near real-time.

As further shown in Fig. 4, process 400 may include analyzing the nuclear plant information (block 420) and generating, based on analyzing the nuclear plant information, an analysis result associated with the nuclear power plant (block 430). For example, analytics. platform 220 may analyze the nuclear plant information and generate, based on analyzing the nuclear plant information, an analysis result associated with the nuclear plant.

In some implementations, analyzing the nuclear plant information may include performing equipment performance analytics. Equipment performance analytics may include an analysis associated with performance, operation, and/or a condition of one or more items of equipment 215 in the nuclear plant. For example, equipment performance analytics may include analyzing the nuclear plant information in order to determine whether equipment 215 performance is satisfactory, is degrading, satisfies a threshold, or the like. As another example, equipment performance analytics may include analyzing the nuclear plant information in order to generate a prediction of a future performance of equipment 215.

In some implementations, analytics platform 220 may analyze the nuclear plant information using an equipment performance analytics model (herein referred to as a performance model) associated with equipment 215. In some implementations, the performance model may be a general linear model, a generalized linear model, or another type of model. In some implementations, the performance model may be associated with a particular item of equipment 215 (i.e., may be specific to a particular item of equipment 215) or multiple items of equipment 215 (i.e., multiple items of a same equipment 215 type, multiple items of equipment 215 associated with performing a particular process, or the like).

In some implementations, analytics platform 220 may generate the performance model based on historical nuclear plant information associated with equipment 215. For example, analytics platform 220 may generate the performance model based on historical operation information (e.g., historical performance information, historical maintenance information, historical operational state information, historical corrective action information, or the like) associated with one or more items of equipment 215.

In some implementations, analytics platform 220 may provide, as input to the performance model, one or more items of nuclear plant information and may receive, as an output, an analysis result associated with a performance of equipment 215. In some implementations, the analysis result of performing equipment performance analytics may include information that describes the performance of equipment 215, such as a current level of performance (e.g., relative to one or more other items of equipment 215, a performance metric, or the like), an indication whether the current performance is satisfactory (e.g., pass or fail), a performance score for the current performance (e.g., a value between 1 and 100, a grade from A to F, or the like), a metric associated with a change in performance (e.g., a percentage in degradation of performance over a period of time, such as a day, a week, a year, or the like), a prediction for a future level of performance, or the like. Additionally, or alternatively, the analysis result may include information that describes a task (e.g., a preventative maintenance task, a repair task, a task associated with observing ongoing performance of equipment 215, or the like), that may need to be performed for equipment 215. In other words, the analysis result may include information that describes a task associated with improving performance of equipment 215 or preventing degraded performance of equipment 215.

As a particular example, assume that the performance model receives performance information, maintenance information, and operational state information associated with a steam turbine in the reactor plant. The performance information indicates low vibration readings (e.g., having a performance score of 1 on a scale of 1 to 10) for the main turbine, as input by a worker via worker device 210 and one or more sensors associated with the steam turbine. The maintenance information indicates that the steam turbine is scheduled for preventative maintenance once per year. The operation state information indicates that the steam turbine is "operational."

The performance model compares the performance information, maintenance information, and operational state information for the steam turbine to a performance rule for the steam turbine. Here, the performance rule may be generated based on nuclear plant information associated with steam turbines associated with the nuclear plant and/or other nuclear plants. The rule indicates that if the steam turbine has an operational steam turbine, a performance score of 1, and an annual preventative maintenance schedule, then the performance model indicates that the steam turbine is performing as expected.

The performance model then outputs a result that indicates that the steam turbine is performing as expected, and predicts that the performance of the steam turbine in the future (within one year) also will be as expected (e.g., based on an assumption indicating that the steam turbine will operate similarly to the other steam turbines associated with the other nuclear plants). The performance model then schedules the annual preventative maintenance task for the steam turbine. The preventative maintenance task includes using non-destructive testing to check for cracks in steam turbine blades.

As another example assume that the performance information for the steam turbine indicates moderate vibration readings (e.g., having a performance score of 3 on a scale of 1 to 10) for the main turbine, as input by a worker via worker device 210 and as received by one or more sensors associated with the steam turbine. The maintenance information indicates that the steam turbine is scheduled for preventative maintenance once per year. The operational state information indicates that the steam turbine is "operational."

The performance model compares the performance information, maintenance information, and operational state information for the steam turbine to a performance rule for the steam turbine. The rule indicates that if the steam turbine has an operational steam turbine, a performance score of 3, and an annual preventative maintenance schedule, then the performance model indicates that the steam turbine is not performing as expected.

The performance model then outputs a result that indicates that the steam turbine is not performing as expected, and predicts that the performance of the steam turbine in the future (within one month) will not be as expected. The performance model then schedules a maintenance task for the steam turbine to be performed immediately. The immediate maintenance task is to remove the steam turbine blades to check for cracks and to repair the blades as appropriate.

As still another example, assume that the performance information indicates high vibration readings (e.g., having a performance score of 8 on a scale of 1 to 10) for the main turbine, as reported by one or more workers via worker device and/or by one or more sensors associated with the steam turbine.

The performance model compares the performance information, maintenance information, and operational state information for the steam turbine to a performance rule for the steam turbine. The rule indicates that if the steam turbine has an operational steam turbine, a performance score of 8, and an annual preventative maintenance schedule, then the performance model indicates that the steam turbine is not performing as expected (e.g., is failing).

The performance model then outputs a result that indicates that the steam turbine is failing, and predicts that the performance of the steam turbine in the future (e.g., immediately) will not be as expected. The performance model then schedules a maintenance task for the steam turbine to be performed immediately. The maintenance task is to immediately perform a controlled shutdown of the nuclear plant, disassemble the steam turbine, and perform remedial maintenance (e.g., repair the steam turbine) accordingly.

Additionally, or alternatively, analytics platform 220 may analyze the nuclear plant information using a statistical analysis technique, such as a linear regression analysis, a logistic regression analysis, or a cluster analysis, a machine learning technique, or another type of technique in order to determine the analysis result.

In this way, analytics platform 220 may perform equipment performance analytics associated with the nuclear plant that reduces safety risks due to reduced unplanned critical equipment 215 failures and prevent potential safety issues due to degraded equipment, reduces unplanned unavailability by enabling earlier identification of degraded nuclear plant equipment performance, reduces operation and maintenance cost by leveraging monitoring capabilities, or the like.

Additionally, or alternatively, analyzing the nuclear plant information may include performing task valuation analytics. Task valuation analytics may include an analysis associated with prioritizing, valuing, organizing, and/or scheduling a task (e.g., a preventative maintenance task, a repair task, a task associated with observing ongoing performance of equipment, or the like) associated with equipment. For example, task valuation analytics may include analyzing the nuclear plant information in order to determine a priority, an order, a schedule, and/or a value associated with a task.

In some implementations, analytics platform 220 may analyze the nuclear plant information and/or information associated with a task (e.g., a task identified by an equipment performance analysis result, a task created by a worker and/or operator of the nuclear plant) using a maintenance value model designed to prioritize, schedule, and/or organize tasks. In some implementations, analytics platform 220 may generate the maintenance value model based on historical performance information associated with equipment (e.g., equipment 215 for which a particular task was performed, equipment 215 for which the particular task was not performed) and/or an outcome associated with the task (e.g., a subsequent impact on performance).

In some implementations, the maintenance value model may be designed to receive, as input, information associated with a set of tasks, such as a task name, an amount of time to complete the task, a level of training or qualification needed to perform the task, a tool needed for the task, a part needed for the task, information that identifies equipment 215 associated with the task, or the like. In some implementations, analytics platform 220 may determine the information associated with the set of tasks based on tasks identified as an analysis result of performing the equipment performance analytics, as described above. Additionally, or alternatively, analytics platform 220 may determine the information associated with the set of tasks based on user input (e.g., when a worker or operator provides information associated with task).

Furthermore, the maintenance value model may be designed to receive as an input worker information (e.g., in order to determine capability and/or availability of workers to perform the task), inventory information (e.g., in order to determine availability of parts and/or tools associated with the task), lockout and/or tagout information (e.g., in order to determine whether equipment 215 is locked out/ tagged out and ready for maintenance), commitment information (e.g., in order to determine whether the task is required), security information and/or environmental information (e.g., in order to assess a risk associated with performing the task), or the like.

In some implementations, an analysis result of performing task valuation analytics may include information that identifies a priority, an order, or the like, for the set of tasks. In this way, tasks may be automatically prioritized such that tasks of higher value are performed first, which may lead to improved operational efficiency of equipment 215, reduced down time (e.g., since urgent tasks may be performed first), or the like. For example, the analysis result may include a set of scores, corresponding to each task, where each score represents a value (e.g., low, medium, high; a value from 1 to 10) for each task based on which a nuclear plant operator may schedule the set of tasks. As another example, the analysis result may include a prioritized list of the set of tasks (e.g., indicating an order in which the tasks should be performed). As another example, the analysis result may include information associated with a cost or a risk of not performing a task or delaying performance of the task. As such, risk assessment may be at least partially automated (e.g., by a plant operator), which may lead to more accurate risk assessment (e.g., as compared to risk assessment based on human intuition).

As a particular example, assume that the maintenance value model receives worker information, inventory information, lockout/tagout information, commitment information, and security information. Assume also that the maintenance value model receives information associated with a task of lapping a gate valve located in the nuclear plant (e.g., because the valve is leaking), a task of calibrating an ionizing radiation sensor (e.g., as a preventative maintenance task), a task of calibrating a thermocouple (e.g., a preventative maintenance task), and a task associated with repairing a vacuum cleaner (e.g., because the motor is broken).

In such a case, the task of lapping the gate valve should be completed in two hours, and the gate valve should be lapped by a trained and/or qualified machinist using a grinder and/or a lapping machine. The task of calibrating an ionizing radiation sensor should be completed in one hour, and the ionizing radiation sensor should be calibrated by a trained and/or qualified instrumentation technician using an ionizing radiation source that emits the same isotope that the ionizing radiation sensor is designed to sense. The task of calibrating the thermocouple should be completed in four hours, and the thermocouple should be calibrated by a trained and/or qualified instrumentation technician using an ice bath. The task of repairing a vacuum cleaner should be completed in four hours by a person trained in health physics (e.g., health physics technician) using electrical/electronic monitoring equipment (e.g., multimeters, circuit tracers, or the like).

The maintenance value model then analyzes this information and defines an order in which the tasks should be performed, along with a value of each task. For example, the maintenance value model determines that the task of lapping the gate valve should be given a value of high because the gate valve is located in the nuclear plant and is leaking, that the tasks of calibrating the ionizing radiation sensor and calibrating a thermocouple should be given values of medium because these tasks are preventative maintenance tasks, and the task of repairing the vacuum cleaner should be given a value of medium because there may be only a limited number of vacuum cleaners in the nuclear plant.

The maintenance value model then outputs an analysis result that indicates that the task of lapping the gate valve should be performed by the machinist as choice number 1, the worker trained in health physics as choice number 2, and by the instrumentation technician as choice number 3. The maintenance value model also outputs an analysis result that indicates that the task of calibrating the ionizing radiation sensor should be performed by the instrumentation technician as choice number 1, and both the machinist and the worker trained in health physics as choice number 2. The maintenance value model also outputs an analysis result that indicates that the task of calibrating the thermocouple should be performed by the instrumentation technician as choice number 1, the machinist as choice number 2, and the worker trained in health physics as choice number 3. The maintenance value model also outputs an analysis result that indicates that the task of repairing the vacuum cleaner should be performed by the worker trained in health physics as choice number 1, the machinist as choice number 2, and the instrumentation technician as choice number 3.

In some implementations, based on the analysis result, analytics platform 220 may automatically generate a schedule associated with the set of tasks (e.g., based on worker availability and capability, part and/or tool availability, priority and/or value of the set of tasks, or the like), create a reservation for a tool and/or a part associated with the task, or the like. For example, analytics platform 220 may generate a schedule for the performance of the above tasks by the respective first choices for each task.

In some implementations, based on the analysis result, analytics platform 220 may automatically perform a task (i.e., without human intervention). For example, analytics platform 220 may automatically power-down or power-up equipment 215, reboot equipment 215, change an attribute of equipment 215 (e.g., an operating speed, a temperature, an output, etc.), or the like.

In this way, analytics platform 220 may perform task valuation analytics associated with the nuclear plant that reduce safety risks resulting from less equipment out of service time for preventative maintenance and preventing potential safety issues due to degraded equipment, reduce the aggregate demand for preventative maintenance tasks, reduce equipment out of service time through optimized value driven maintenance, and reduce operation and maintenance costs by reducing the parts usage and maintenance labor hours required to support preventative maintenance.

Additionally, or alternatively, analyzing the nuclear plant information may include another type of analytics, such as worker analytics that facilitates assessment of workers and/or contractors (e.g., temporary employees). Here, analytics platform 220 may analyze historical information associated with a worker (e.g., a task name, a task type, a task start time, a task completion time, or the like) in order to improve assessment of productivity of the worker, training planning for the worker, planning and/or estimation of a future need for additional workers, or the like.

In this way, analytics platform 220 may analyze the nuclear plant information, and provide an analysis result that permits improved (e.g., efficient, timely, organized) operation, performance, and/or maintenance of equipment 215 in the nuclear plant. Here, performance of analytics by analytics platform 220 may reduce power usage, memory consumption, and/or processing resource usage of worker devices 210 and equipment 215 in the nuclear plant since worker devices 210 and equipment 215 need not store and/or analyze the nuclear plant information.

As further shown in Fig. 4, process 400 may include providing information associated with the analysis result (block 440). For example, analytics platform 220 may provide information associated with the analysis result.

In some implementations, analytics platform 220 may provide information associated with the analysis result for display via worker device 210. For example, analytics platform 220 may provide information associated with an analysis result of performing equipment performance analytics in order to allow a worker and/or a nuclear plant operator to view information that describes the performance of an item of equipment 215. As another example, analytics platform 220 may provide information associated with an analysis result of performing task valuation analytics in order to allow a worker and/or a nuclear plant operator to view information that describes a priority of a set of tasks to be performed and/or a schedule generated for performing the set of tasks.

In some implementations, analytics platform 220 may provide the information associated with the analysis result immediately upon determination of the result. In this way, plant-wide operation and/or maintenance may be achieved in real-time or near real-time. In some implementations, the analysis result may be updated (e.g., automatically) when analytics platform 220 receives additional nuclear plant information. For example, an analysis result of performing equipment performance analytics may be updated as analytics platform 220 receives additional operational information.

Additionally, or alternatively, analytics platform 220 may generate a work package (e.g., a collection of electronic documents to be accessible via worker device 210) associated with the analysis result, and provide the work package to worker device 210. In some implementations, the work package may include information and/or resources to be accessible by the worker in order to facilitate performance of a task. For example, the work package may include information that identifies the task (e.g., a task name, a task type, an item of equipment 215 associated with the task), information that describes the task (e.g., drawings, procedures, images, or the like), information that identifies a tool and/or a part to be used to perform the task (e.g., a tool and/or a part reserved by analytics platform 220 during the performance of task valuation analytics).

As another example, the work package may include background information, and/or documentation associated with an assigned task, such as a pre-job brief associated with the task, technical specifications associated with equipment 215, engineering programs associated with equipment 215, plant line information associated with equipment 215, or the like. As another example, the work package may include information for supporting performance of the task, such as training material to be reviewed before performing the task, emergency and/or evacuation procedures to be implemented in case of an emergency during performance of the task, an interface that supports audio and/or video communication with a remote worker (e.g., such that the worker may communicate with the remote worker for assistance with performing the task), or the like.

Additionally, or alternatively, the work package may include one or more items of the nuclear plant information to be provided for display via worker device 210. For example, analytics platform 220 may provide, for display via worker device 210, dosimetry information that identifies a dosage of radiation experienced by the worker carrying the worker device 210, environmental information that identifies a gas measurement or radiation level at a location of the worker, or the like (e.g., such that the worker may monitor radiation dosage and/or environmental conditions while performing the task). In some implementations, the work package may facilitate provisioning of nuclear plant information during performance of the task. For example, the work package may provide an interface for the worker to provide nuclear plant information associated with the task, such as information gathered in association with equipment 215 (e.g., an image, a video, notes, etc.), information that identifies a status of the task performance, or the like. In this way, the work package may facilitate collaboration among workers (e.g., in the field, in a control room, etc.) such that information may be exchanged, accessed, updated, or the like, in real-time or near real-time.

In the above examples, analytics platform 220 may identify a worker to which the work package is to be made available. For example, analytics platform 220 may identify a worker to perform a task by matching training and/or qualification levels of the worker, a location of the worker, a work schedule of the worker, a job title of the worker, or the like, to information associated with the task, such as training and/or qualification requirements associated with the task, a location of equipment 215 associated with the task, a deadline to complete the task, or the like. In some implementations, analytics platform 220 generate a set of scores corresponding to a set of workers, where each score represents a level of compatibility between the worker and the task. Here, analytics platform 220 may identify a worker, of the set of workers, to perform the task based on the set of scores (e.g., a worker with a highest score, a worker with a score that satisfies a threshold, etc.). In this example, analytics platform 220 may provide the work package to worker device 210 corresponding to (e.g., carried by) the identified worker).

Additionally, or alternatively, analytics platform 220 may provide information associated with the analysis result in order to cause an action to be automatically performed.

For example, in a case where a preventative maintenance task is to be undertaken (e.g., using non-destructive testing to check for cracks in steam turbine blades), analytics platform 220 may provide information that causes equipment 215 (e.g., the steam turbine) to be automatically taken offline line for performance of the task. In this way, analytics platform 220 reduces an amount of labor required for manual entry by a worker and/or ensures worker safety.

As another example, in a case where a task is to calibrate equipment 215 (e.g., an ionizing radiation sensor), analytics platform 220 may provide information that causes a setting of equipment 215 to be automatically changed based on the calibration. In this way, analytics platform 220 reduces unplanned equipment out-of-service time by allowing immediate access and response to pertinent data from the calibration.

As another example, in a case where a task is to perform non-destructive testing of equipment 215 (e.g., to check for cracks in steam turbine blades), analytics platform 220 may provide information that causes a time for additional inspection and/or performance evaluation of equipment 215 to be scheduled after the non-destructive testing. In this way, analytics platform 220 provides reduced turbine out-of-service time, reduced post maintenance testing, increased return-to-service time, and better troubleshooting.

As yet another example, in a case where a task is to perform a controlled shutdown of equipment 215 (e.g., shut down of a reactor in response to high vibration readings for the main turbine), analytics platform 220 may provide information that causes a notification to be sent to the operator to perform the controlled shutdown of equipment 215. In this way, analytics platform 220 ensures timely shut down of equipment 215 in need of repair and/or maintenance, while improving overall nuclear plant safety.

As still another example, analytics platform 220 may provide information associated with the analysis result that causes a worker order, associated with performing the task, to be automatically generated. In this way, analytics platform 220 ensures tasks are scheduled for performance, thereby improving overall nuclear plant safety.

As another example, analytics platform 220 may provide information that causes a worker to be notified of a task assignment (e.g., via worker device 210). In this way, analytics platform 220 improves communication of task related information to workers, thereby improving overall efficiency of nuclear plant operation.

As another example, analytics platform 220 may provide information that causes a part and/or a tool to be reserved for a task. For example, in a case where the task is to calibrate a thermocouple, analytics platform 220 may provide information that causes an ice bath to be reserved for a period of time to perform the calibration. In this way, analytics platform 220 reduces delay times for task performance, maintains a chain of custody for a part and/or a tool, and improves tracking and/or utilization of the part and/or the tool.

As yet another example, analytics platform 220 may provide information that causes a part and/or a tool to be automatically ordered. For example, in a case where a task is to repair a vacuum cleaner, analytics platform 220 may determine whether a part is available (e.g., in storage) and, if not, may order the part. In this way, analytics platform 220 may reduce equipment 215 downtime, while precluding a worker from having to check part inventory and/or order the part.

As still another example, analytics platform 220 may provide information that grants a worker access (e.g., via worker device 210) to training materials associated with a task. For example, in a case where the task is to calibrate the thermocouple, analytics platform 220 may authorize the instrument technician to access training materials needed for the task via worker device 210. In this way, analytics platform 220 reduces outage time by enabling the instrument technician to receive relevant detailed training prior to performance of the task.

By providing the information associated with the analysis result, overall performance of the nuclear plant may be increased. For example, provisioning of the analysis result may allow for improved (e.g., real-time or near real-time) plant-wide performance monitoring and reduced equipment 215 down time (e.g., due to efficient and organized task scheduling), while efficiently utilizing nuclear plant resources (e.g., parts, tools, workers).

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

Implementations described herein may provide a digital platform for a nuclear plant that reduces operations and/or maintenance costs of the nuclear plant, while maintaining or improving a level of performance and allowing industrial and safety requirements to be satisfied.

The foregoing disclosure provides illustration and description, but is not intended to be exhaustive or to limit the implementations to the precise form disclosed. Modifications and variations are possible in light of the above disclosure or may be acquired from practice of the implementations.

For example, the nuclear plant digital platform may provide one or more other capabilities that improve one or more aspects of the nuclear plant. For example, in some implementations, the digital nuclear plant platform may include an electronic dosimetry display capability. The electronic dosimetry display capability may allow information, determined and/or measured by an electronic personal dosimeter (EPD) (e.g., worn by a worker in the nuclear plant), to be viewable and/or accessible (e.g., in real-time, in a graphical format, etc.) by a supervisor, health protection personnel, radiation protection personnel, or the like. In some implementations, the electronic dosimetry display capability may provide integration of EPD information with a work order and/or a task associated with radiation work permit information.

In some implementations, the electronic dosimetry display capability may lead to reduced radiation dosages by providing for direct monitoring to assess current dose readings for the EPD. Additionally, or alternatively, the electronic dosimetry display capability may lead to reduced field delays for tasks awaiting health protection support, which may allow a critical path time, associated with performing one or more tasks, to be reduced. Additionally, or alternatively, the electronic dosimetry display capability may allow for decreased operations and/or maintenance costs by allowing health protection resources to be leveraged across a greater number of tasks requiring active health protection support.

Another example capability provided by the digital nuclear plant platform may include an emergency evacuation and/or action support capability. In some implementations, the emergency evacuation and/or action support capability may allow worker device 210 (e.g., a wearable device, such as a smartwatch, a head-mounted-display device, etc.) to be used to alert a worker of an emergency situation (e.g., by providing audible and/or visual indicators). Here, worker device 210 may signal the worker to evacuate (e.g., exit the nuclear plant), proceed to a particular location (e.g., a designated mustering point, a station at which the worker is to perform an emergency action, etc.), or the like.

In some implementations, the emergency evacuation and/or action support capability may provide for improved worker safety by spreading emergency instructions quickly and effectively, thereby reducing exposure to a hazardous condition (e.g., a radiation leak). Additionally, or alternatively, the emergency evacuation and/or action support capability may lead to a reduced delay during a drill and/or a non-emergency, and may ensure that the worker can leave work in a safe condition before leaving an area during an emergency. Additionally, or alternatively, the emergency evacuation and/or action support capability may provide decreased embedded costs for training and/or operations and maintenance by improving mustering time (e.g., by enhancing quality and/or delivery of emergency instructions).

Further features, aspects and embodiments are provided below in the following entities:
Entity 1. A device, comprising:
   one or more processors to:
      receive nuclear plant information associated with a nuclear plant,
      the nuclear plant information including information relating to operation of equipment located within the nuclear plant, and
      the information being provided by the equipment or by a set of worker devices carried by workers in the nuclear plant;
      analyze the nuclear plant information;
      determine, based on analyzing the nuclear plant information, an analysis result corresponding to the equipment,
      the analysis result including information describing at least one of:
      a performance of the equipment, or
      a task to be performed in association with maintaining, repairing, or observing the equipment; and
      provide information associated with the analysis result.
Entity 2. The device of entity 1, where the analysis result describing the performance of the equipment includes at least one of:
   information indicating whether the performance of the equipment satisfies a threshold,
   information indicating whether the performance of the equipment is degrading, or
   information relating to a prediction of a future performance of the equipment.
Entity 3. The device of entity 1, where the analysis result describing the task to be performed in association with maintaining, repairing, or observing the equipment includes information associated with at least one of:
   a priority for performance of the task relative to another task,
   a score that represents a value for the task, or
   a cost or a risk of not performing the task or delaying performance of the task.
Entity 4. The device of entity 1, where the one or more processors are further to:
   identify a worker to perform the task;
   generate a work package associated with performing the task; and
   where the one or more processors, when providing the information associated with the analysis result, are to:
      provide the work package to a worker device associated with the worker.
Entity 5. The device of entity 1, where the one or more processors, when providing the information associated with the analysis result, are to:
   provide information that causes the equipment to automatically be taken offline.
Entity 6. The device of entity 1, where the one or more processors, when providing the information associated with the analysis result, are to:
   provide information that causes a part or a tool, to be used to in association with performing the task, to be automatically ordered.
Entity 7. The device of entity 1, where the one or more processors, when analyzing the nuclear plant information, are to:
   identify an equipment performance analytics model associated with analyzing the performance of the equipment;
   provide one or more items of the nuclear plant information as input to the equipment performance analytics model;
   receive an output from the equipment performance analytics model; and
   where the one or more processors, when determining the analysis result, are to:
      determine the analysis result based on the output of the equipment performance analytics model.
Entity 8. A method, comprising:
   obtaining, by a device, nuclear plant information that includes information relating to operation of equipment located within a nuclear plant,
   the nuclear plant information being provided by a plurality of worker devices or a plurality of sensors associated with the equipment;
   analyzing, by the device, the nuclear plant information;
   determining, by the device and based on analyzing the nuclear plant information, an analysis result corresponding to the equipment,
      the analysis result including information describing at least one of:
         a performance of the equipment, or
         a task to be performed in association with maintaining, repairing, or observing the equipment; and
         providing information associated with the analysis result.
Entity 9. The method of entity 8, where the analysis result describing the performance of the equipment includes at least one of:
   information indicating whether the performance of the equipment satisfies a threshold,
   information indicating whether the performance of the equipment is degrading, or
   information relating to a prediction of a future performance of the equipment.
Entity 10. The method of entity 8, where the analysis result describing the task to be performed in association with maintaining, repairing, or observing the equipment includes information associated with at least one of:
   a priority for performance of the task relative to one or more other tasks,
   a score that represents a value for the task, or
   a cost or a risk of not performing the task or delaying performance of the task.
Entity 11. The method of entity 8, further comprising:
   identifying a worker to perform the task;
   generating a work package associated with performing the task; and
   where providing the information associated with the analysis result comprises:
      providing the work package to a worker device associated with the worker.
Entity 12. The method of entity 8, where providing the information associated with the analysis result comprises:
   providing information that grants a worker access to a location of the equipment.
Entity 13. The method of entity 8, where providing the information associated with the analysis result comprises:
   providing information that causes a part or a tool, to be used to in association with performing the task, to be automatically reserved for use by a worker associated with one of the plurality of worker devices.
Entity 14. The method of entity 8, where analyzing the nuclear plant information comprises:
   identifying a maintenance value model for determining a value of the task;
   providing one or more items of the nuclear plant information as input to the maintenance value model;
      receiving an output from the maintenance value model; and
      where determining the analysis result comprises:
      determining the analysis result based on the output of the maintenance value model.
Entity 15. A non-transitory computer-readable medium storing instructions, the instructions comprising:
   one or more instructions that, when executed by one or more processors, cause the one or more processors to:
      receive nuclear plant information associated with a nuclear plant,
      the nuclear plant information including information relating to operation of equipment in the nuclear plant, and
      the information being provided by sensors in the nuclear plant, the equipment, and worker devices corresponding to workers in the nuclear plant;
      perform an analysis of the nuclear plant information;
      obtain, based on performing the analysis of the nuclear plant information, an analysis result associated with the equipment,
      the analysis result including information describing at least one of:
         a performance of the equipment, or
         a task to be performed in association with the equipment; and
         provide information associated with the analysis result.
Entity 16. The non-transitory computer-readable medium of entity 15, where the analysis result describing the performance of the equipment includes at least one of:
   information indicating whether the performance of the equipment satisfies a threshold,
   information indicating whether the performance of the equipment is degrading, or
   information relating to a prediction of a future performance of the equipment.
Entity 17. The non-transitory computer-readable medium of entity 15, where the analysis result describing the task to be performed in association with maintaining, repairing, or observing the equipment includes information associated with at least one of:
   a priority for performance of the task relative to another task,
   a score that represents a value for the task, or
   a cost or a risk of not performing the task or delaying performance of the task.
Entity 18. The non-transitory computer-readable medium of entity 15, where the one or more instructions, when executed by the one or more processors, further cause the one or more processors to:
   identify a worker to perform the task;
   generate a work package associated with performing the task; and
   where the one or more instructions, that cause the one or more processors to provide the information associated with the analysis result, further cause the one or more processors to:
      provide the work package to a worker device associated with the worker.
Entity 19. The non-transitory computer-readable medium of entity 15, where the one or more instructions, that cause the one or more processors to provide the information associated with the analysis result, further cause the one or more processors to:
   provide information that causes the equipment to automatically be taken offline or to automatically be brought online.
Entity 20. The non-transitory computer-readable medium of entity 15, where the one or more instructions, that cause the one or more processors to provide the information associated with the analysis result, further cause the one or more processors to:
   provide the information associated with the analysis result to cause a part or a tool, to be used to in association with performing the task, to be automatically reserved or ordered.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A device, comprising:
one or more processors to:
receive nuclear plant information associated with a nuclear plant,
the nuclear plant information including information relating to operation of equipment located within the nuclear plant, and
the information being provided by the equipment or by a set of worker devices carried by workers in the nuclear plant;
analyze the nuclear plant information;
determine, based on analyzing the nuclear plant information, an analysis result corresponding to the equipment,
the analysis result including information describing at least one of:
a performance of the equipment, or
a task to be performed in association with maintaining,
repairing, or observing the equipment; and
provide information associated with the analysis result.

2. The device of claim 1, where the analysis result describing the performance of the equipment includes at least one of:
information indicating whether the performance of the equipment satisfies a threshold,
information indicating whether the performance of the equipment is degrading, or
information relating to a prediction of a future performance of the equipment.

3. The device of claim 1 or 2, where the analysis result describing the task to be performed in association with maintaining, repairing, or observing the equipment includes information associated with at least one of:
a priority for performance of the task relative to another task,
a score that represents a value for the task, or
a cost or a risk of not performing the task or delaying performance of the task.

4. The device of any one of the preceding claims, where the one or more processors are further to:
identify a worker to perform the task;
generate a work package associated with performing the task; and
where the one or more processors, when providing the information associated with the analysis result, are to:
provide the work package to a worker device associated with the worker.

5. The device of any one of the preceding claims, where the one or more processors, when providing the information associated with the analysis result, are to:
provide information that causes the equipment to automatically be taken offline.

6. The device of any one of the preceding claims, where the one or more processors, when providing the information associated with the analysis result, are to:
provide information that causes a part or a tool, to be used to in association with performing the task, to be automatically ordered.

7. The device of any one of the preceding claims, where the one or more processors, when analyzing the nuclear plant information, are to:
identify an equipment performance analytics model associated with analyzing the performance of the equipment;
provide one or more items of the nuclear plant information as input to the equipment performance analytics model;
receive an output from the equipment performance analytics model; and
where the one or more processors, when determining the analysis result, are to:
determine the analysis result based on the output of the equipment performance analytics model.

8. A method, comprising:
obtaining, by a device, nuclear plant information that includes information relating to operation of equipment located within a nuclear plant,
the nuclear plant information being provided by a plurality of worker devices or a plurality of sensors associated with the equipment;
analyzing, by the device, the nuclear plant information;
determining, by the device and based on analyzing the nuclear plant information, an analysis result corresponding to the equipment,
the analysis result including information describing at least one of:
a performance of the equipment, or
a task to be performed in association with maintaining, repairing, or
observing the equipment; and
providing information associated with the analysis result.

9. The method of claim 8, where the analysis result describing the performance of the equipment includes at least one of:
information indicating whether the performance of the equipment satisfies a threshold,
information indicating whether the performance of the equipment is degrading, or
information relating to a prediction of a future performance of the equipment.

10. The method of claim 8 or 9, where the analysis result describing the task to be performed in association with maintaining, repairing, or observing the equipment includes information associated with at least one of:
a priority for performance of the task relative to one or more other tasks,
a score that represents a value for the task, or
a cost or a risk of not performing the task or delaying performance of the task.

11. The method of any one of claims 8 to 10, further comprising:
identifying a worker to perform the task;
generating a work package associated with performing the task; and
where providing the information associated with the analysis result comprises:
providing the work package to a worker device associated with the worker.

12. The method of any one of claims 8 to 11, where providing the information associated with the analysis result comprises:
providing information that grants a worker access to a location of the equipment.

13. The method of any one of claims 8 to 12, where providing the information associated with the analysis result comprises:
providing information that causes a part or a tool, to be used to in association with performing the task, to be automatically reserved for use by a worker associated with one of the plurality of worker devices.

14. The method of any one of claims 8 to 13, where analyzing the nuclear plant information comprises:
identifying a maintenance value model for determining a value of the task;
providing one or more items of the nuclear plant information as input to the maintenance value model;
receiving an output from the maintenance value model; and
where determining the analysis result comprises:
determining the analysis result based on the output of the maintenance value model.

15. A computer program product comprising machine executable instructions, which, when loaded and executed by a processor, cause the processor to perform operations according to the method of any one of claims 8-14.
